# EUROPÄISCHE PATENTSCHRIFT

(11) **EP 0 294 718 B1**
(45) Veröffentlichungstag und Bekanntmachung des Hinweises auf die Patenterteilung: **16.03.1994**
(21) Anmeldenummer: 88108887.6
(22) Anmeldetag: 03.06.1988
(51) Int. Cl.: G11B 5/704

(54) **Flexibles magnetisches Aufzeichnungsmaterial mit verbesserter Schälfestigkeit**
Flexible magnetic recording material with improved adhesion
Matériau flexible d'enregistrement magnétique à adhésion améliorée

(30) Priorität: 09.06.1987 US 59995
(43) Veröffentlichungstag der Anmeldung: 14.12.1988
(73) Patentinhaber: HOECHST CELANESE CORPORATION, Somerville, N.J. 08876 (US)
(72) Erfinder: Heberger, John M., Greer South Carolina 29651 (US); Foxhall, Russell S., Lyman South Carolina 29365 (US)
(74) Vertreter: Güthlein, Paul, Dr.

(56) Entgegenhaltungen:
- DE-A- 1 571 126
- US-A- 4 486 483

## Beschreibung

Die vorliegende Erfindung betrifft ein flexibles magnetisches Aufzeichnungsmaterial aus einer Polyesterträgerfolie und einer darauf aufgebrachten magnetisierbaren Schicht. Insbesondere betrifft die Erfindung ein Material, bei dem die Polyesterfolie zunächst mit einer Haftvermittlerschicht versehen und anschließend mit einem Beschichtungsgemisch, das in einem polymeren Bindemittel dispergierte ferromagnetische Partikel enthält, beschichtet wird.

Die Herstellung flexibler magnetischer Aufzeichnungsmaterialien wie Audio-, Video- oder Computerbänder erfolgt üblicherweise durch Beschichten einer biaxial orientierten Polyesterfolie mit einer Lösung enthaltend ferromagnetische Teilchen wie Eisen- oder Chromoxidpartikel und ein in einem starken Lösemittel wie Tetrahydrofuran, Methylethylketon, Methylisobutylketon oder Cyclohexanon gelöstes Bindemittel aus einem Polyurethanpräpolymeren. Ein starkes Lösemittel wird üblicherweise verwendet, um eine bessere Haftung der ferromagnetischen Beschichtung an die Polyesteroberfläche zu erzielen. Normalerweise verdunstet das Lösemittel während der Trocknung des Polyurethanpräpolymeren.

Zu den Bindemitteln, die typischerweise für die Herstellung von flexiblen magnetischen Aufzeichnungsmaterialien, allgemein "Magnetbänder" genannt, eingesetzt werden, zählen Polyurethane, Polyvinyle und Polyurethan-Polyvinyl-Propfcopolymerisate. Zur Erzielung der optimalen Härte, Flexibilität und Haftung können weitere Polymere als Zusätze in den Bindemitteln enthalten sein. Auch Schmiermittel, Dispergierhilfsmittel und Härter sind in typischen Beschichtungsgemischen enthalten.

Magnetbänder müssen hinsichtlich ihrer physikalischen Eigenschaften wie akzeptabler Reibungskoeffizient, hoher Elastizitätsmodul und gute Reißfestigkeit sowie hinsichtlich ihrer chemischen Eigenschaften und ihrer Haftungseigenschaften höchsten Ansprüchen genügen. Das polymere Bindemittel muß auf dem Polyesterträgermaterial haften, mit den ferromagnetischen Teilchen kompatibel sein und über lange Zeit stabil bleiben. Schließlich muß das Magnetband über eine hohe Datenspeicherkapazität verfügen.

In den letzten Jahren waren die Hersteller von Magnetbändern bemüht, die Informationsdichte und die allgemeine Qualität von flexiblen magnetischen Aufzeichnungsmaterialien zu steigern, um mit der Weiterentwicklung auf dem Gebiet der Aufzeichnungstechnik wie Senkrecht- und Digitalaufnahmeverfahren und abnehmende Spurbreiten Schritt halten zu können. Die Hersteller fordern bessere Polyesterträger, insbesondere noch dünnere Folien mit noch größerer mechanischer Beanspruchbarkeit, glatteren Oberflächen und erhöhter Haftung zwischen Träger und ferromagnetischer Beschichtung. Es wurden auch Versuche unternommen, dünnere, glattere ferromagnetische Beschichtungen mit kleineren Partikeln und größerer Koerzitivkraft zu entwickeln.

Im Rahmen dieser Entwicklungsarbeit brachte die amerikanische Normbehörde ANSI (American National Standard Institute) einen Normvorschlag zur Haftung der Beschichtung auf dem Trägerband heraus (ANSI Pojekt Nr. 488, 3. Entwurf, 19.04.1985). Diesem Normentwurf zufolge soll der Kraftaufwand zum Abziehen einer ferromagnetischen Beschichtung von Trägerband größer oder gleich 0,12 N pro mm Bandbreite sein. Zwar produziert bereits mindestens ein Hersteller bereits Magnetbänder, deren Abziehwiderstand größer als 0,12 N/mm ist, doch erfüllen bei weitem noch nicht alle handelsüblichen Magnetbänder die Anforderungen dieses ANSI-Normvorschlags.

Die Haftfestigkeit kann beispielsweise dadurch erhöht werden, daß man die Folienoberfläche vor dem Aufbringen der ferromagnetischen Beschichtung einer Koronabehandlung unterzieht. Dies ist jedoch ein ungünstiges Verfahren, da der Einsatz von elektrischer Hochspannung in Gegenwart flüchtiger organischer Lösemittel, wie sie bei der Herstellung flexibler magnetischer Aufzeichnungsmaterialien verwendet werden, die Feuer- und Explosionsgefahr stark erhöht.

Es wurde auch vorgeschlagen, zwischen Trägerfolie und ferromagnetischer Beschichtung eine Haft- oder Grundierschicht aufzubringen. In US-A-3 215 554 werden beispielsweise Vinylidenchlorid/Acrylnitril-Copolymere als Grundierschicht beschrieben, und US-A-3 387 995 beschreibt zum gleichen Zweck ein Polykondensationsprodukt aus Terephthalsäure, Isophthalsäure und Ethylenglykol. In US-A-3 661 874 wird der Einsatz eines aus der Umsetzung von epoxidiertem Polybutadien mit Aminen erhaltenen Reaktionsprodukts zur Verbesserung der Haftung vorgeschlagen. Schließlich ist aus US-A-4 210 703 ein kationisch polymerisiertes Epoxidharz bekannt, das der Verbesserung der Haftungseigenschaften dient und gleichzeitig verhindert, daß durch die bei der Magnetbandherstellung verwendeten starken Lösemittel niedermolekulare Oligomere aus der Polyesterfolie extrahiert werden.

Die Aufgabe der Erfindung bestand darin, ein magnetisches Aufzeichnungsmaterial herzustellen, das sich durch eine besonders hohe Schälfestigkeit auszeichnet und das gleichzeitig preiswert und ohne die Gefahr von Explosionen oder anderen Gesundheitsgefährdungen herstellbar ist.

Gelöst wird diese Aufgabe durch ein flexibles magnetisches Aufzeichnungsmaterial der eingangs genannten Gattung umfassend
i) eine orientierte Polyesterfolie,
ii) eine Haftvermittlerschicht auf wenigstens einer Seite der orientierten Polyesterfolie,
iii) eine ferromagnetische Beschichtung über der Haftvermittlerschicht, enthaltend ferromagnetische Partikel und polymeres Bindemittel.

Die kennzeichnenden Merkmale des Erfindungsgegenstandes sind darin zu sehen, daß die Haftvermittlerschicht als Hauptbestandteil ein Salz enthält, ausgewählt aus der Gruppe
a) wasserlösliches Salz aus einer ungesättigten Fettsäure mit 10 bis 18 C-Atomen und einem Alkalimetall oder Mischungen solcher Salze,
b) wasserlösliches Salz aus einem Alkylsulfat mit 8 bis 18 C-Atomen und einem Alkalimetall oder Mischungen solcher Salze,
und daß der Hauptbestandteil in einer Menge vorliegt, die ausreichend ist, um die Haftung der ferromagnetischen Beschichtung an der orientierten Polyesterfolie zu verbessern.

Eine bevorzugte Ausführungsform der Erfindung betrifft ein Computerband hoher Aufzeichnungsdichte, das eine ausgezeichnete Schälfestigkeit besitzt und
i) eine biaxial orientierte Polyethylenterephthalatfolie,
ii) eine mindestens einseitig auf die Folie aufgebrachte Haftvermittlerschicht, die im wesentlichen aus einem wasserlöslichen Salz der Ölsäure besteht,
iii) eine auf die Haftvermittlerschicht aufgebrachte ferromagnetische Beschichtung aus Chromdioxidpartikeln und einem thermoplastischen Polyurethan/Polyester-Blockcopolymeren als Bindemittel
umfaßt.

Das Bindemittel ist dabei ein Reaktionsprodukt aus
(A) einem Polyester mit endständigen Hydroxylgruppen, der seinerseits ein Reaktionsprodukt von einem hydrolysebeständigen zweiwertigen Alkohol ist,
(B) einem Kettenverlängerer und
(C) einem aromatischen Diisocyanat.

Die Anteile der Komponenten (A), (B) und (C) sind so gewählt, daß ein Polyester/Polyurethan-Blockcopolymeres entsteht, das einen Gehalt an Polyurethaneinheiten von 37 bis 40 Gew.-% mit Molmassen von mehr als 60 000 hat und dessen Polyestersegmente Molmassen im Bereich von 500 bis 1 500 aufweisen.

Die Erfindung betrifft ferner ein Verfahren zur Herstellung eines magnetischen Aufzeichnungsmaterials umfassend die Schritte
i) Extrudieren eines im wesentlichen amorphen Polyesters in Form einer Flachfolie und Abkühlen der Schmelze zur Bildung einer Vorfolie;
ii) Orientieren der Vorfolie in Längsrichtung zur Bildung einer monoaxial orientierten Polyesterfolie;
iii) Beschichten der monoaxial orientierten Polyesterfolie mit einer wäßrigen Lösung enthaltend
   a) wasserlösliches Salz aus einer ungesättigten Fettsäure mit 10 bis 18 C-Atomen und einem Alkalimetall oder Mischungen solcher Salze
   oder
   b) wasserlösliches Salz aus einem Alkylsulfat mit 8 bis 18 C-Atomen und einem Alkalimetall oder Mischungen solcher Salze
   zur Bildung einer monoaxial orientierten Polyesterfolie mit Haftvermittlerbeschichtung;
iV) Orientieren der monoaxial orientierten Polyesterfolie mit Haftvermittlerbeschichtung in Querrichtung zur Bildung einer biaxial orientierten Polyesterfolie;
v) Hitzefixieren der biaxial orientierten Polyesterfolie;
vi) Überziehen der Haftvermittlerbeschichtung auf der biaxial orientierten und hitzefixierten Polyesterfolie mit einer ferromagnetischen Beschichtung enthaltend
   a) ein Lösemittel aus der Gruppe Tetrahydrofuran, Methylethylketon, Methylisobutylketon und Cyclohexanon,
   b) ferromagnetische Partikel,
   c) ein Präpolymer;
vii) Aushärten des Präpolymers zur Bildung einer ferromagnetischen Beschichtung enthaltend ferromagnetische Partikel verteilt in einem polymeren Bindemittel.

Die Basisfolie aus orientiertem thermoplastischem Polyester besteht bevorzugt aus Polyethylenterephthalat, insbesondere aus biaxial orientiertem Polyethylenterephthalat. Die Erfindung läßt sich jedoch ebenso auf Folien auf Basis eines kristallisierbaren Polyesters aus der Polykondensation eines Glykols, z. B. Ethylenglykol oder Butandiol bzw. deren Gemische, mit Terephthalsäure oder Mischungen von Terephthalsäure und anderen Dicarbonsäuren wie z. B. Isophthalsäure, Diphensäure und Sebacinsäure oder deren polyesterbildende Äquivalente anwenden. Zur Verbesserung der Verarbeitungseigenschaften derartiger Folien enthält der Polyester vorzugsweise nicht-ferromagnetische anorganische Partikel. Die Herstellung des Polyesters erfolgt beispielsweise gemäß US-A-3 821 156 oder US-A-3 884 870. Die Folienproduktion erfolgt ebenfalls mit Hilfe bekannter Verfahren und Vorrichtungen. Zum Beispiel wird eine mit Füllstoffpartikeln beaufschlagte Polymerenschmelze als amorphe Folie auf eine polierte, rotierende Kühltrommel extrudiert, wo sich eine gegossene Folie aus dem Polymeren ausbildet. Anschließend wird die Folie axial gestreckt, und zwar bei einer monoaxial orientierten Folie lediglich in einer Richtung, d. h. entweder in Extrusionsrichtung (längs) oder senkrecht zur Extrusionsrichtung (quer), und bei einer biaxial orientierten Folie in zwei Richtungen, d. h. sowohl in Längs- als auch in Querrichtung. Der erste an der gegossenen Folie durchgeführte Streckschritt kann beliebig in einer der beiden rechtwinklig zueinander verlaufenden Richtungen erfolgen. Um der Folie Festigkeit und Zähigkeit zu verleihen, kann etwa um das 3,0- bis 5,0fache der ursprünglichen Abmessungen der gegossenen Folie in einer oder beiden Richtungen gestreckt werden. Der Verstreckungsgrad liegt bei Polyesterfolien vorzugsweise etwa zwischen dem 3,2- bis 4,2fachen der ursprünglichen Abmessungen.

Während der Streckschritte liegen die Temperaturen im Bereich zwischen der Glasübergangstemperatur des jeweils eingesetzten Polymeren bis unterhalb der Temperatur, bei der das Polymere weich wird und schmilzt.

Falls gewünscht, wird nach dem Strecken für die zur Kristallisation der Folie erforderliche Dauer wärmebehandelt. Durch die Kristallisation werden die mechanischen und thermischen Eigenschaften der Folie fixiert. Polyethylenterephthalat wird z. B. bei einer Temperatur im Bereich von etwa 190 °C bis 240 °C, vorzugsweise von etwa 215 °C bis 235 °C, wärmebehandelt.

Die erfindungsgemäße Alkalisalz-Haftvermittlerschicht in Form einer wäßrigen Lösung kann während einer der drei folgenden Stufen der Folienherstellung in-line aufgebracht werden: während der dem Strecken vorausgehenden Stufe, d. h. zwischen dem Gießen der amorphen Folie und dem ersten Streckschritt, wie es z. B. in GB-A-1 411 564 beschrieben ist; während der Streckzwischenstufe, d. h. zwischen dem monoaxialen und dem biaxialen Strecken, z. B. gemäß US-A-4 214 035; oder während der Stufe nach dem Strecken, d. h. im Anschluß an das biaxiale Strecken, vor dem Aufwickeln der Folie. Normalerweise ist die Wärme, mit der die Folie beim Strecken oder den abschließenden Konditionierstufen beaufschlagt wird, ausreichend, um Wasser und andere flüchtige Bestandteile zu vertreiben und die Haftvermittlerbeschichtung zu trocknen. Sollte die Beschichtung allerdings nach den Heizphasen aufgebracht werden, wäre eine gesonderte Trockenstufe erforderlich.

In einer bevorzugten Ausführung wird die Haftvermittlerschicht nach dem monoaxialen Strecken, d. h. nach dem Strecken der Folie in einer Richtung, jedoch vor dem Strecken in der rechtwinklig dazu verlaufenden Richtung, aufgebracht. In einer weiteren bevorzugten Ausführung wird die Folie vor dem Beschichten zunächst in Längsrichtung gestreckt. Dabei wird die Folie nach dem Längsstrecken nach einem der bekannten Verfahren beschichtet, zum Beispiel mit Walzen, durch Aufsprühen, mit Schlitzdüsen oder durch Tauchen. In einer bevorzugten Ausführung wird die Folie mit Gravurwalzen beschichtet. Die uniaxial gestreckte Folie kann ferner vor dem Beschichten in bekannter Weise mit einem elektrischen Coronaentladegerät coronabehandelt werden. Die Coronabehandlung vermindert die Hydrophobie der Folienoberfläche, wodurch die wäßrige Beschichtung die Oberfläche leichter benetzen kann und somit die Haftung der Haftvermittlerbeschichtung an der Oberfläche verbessert wird.

Als Haftvermittlerschichten für Polyethylenterephthalatfolien eignen sich - wie vorstehend erwähnt - wasserlösliche Alkalisalze von ungesättigten Fettsäuren mit etwa 10 bis 18 Kohlenstoffatomen. Es können die Natrium- oder Kaliumsalze von Öl-, Palmitolein-, Ricinol- und Petroselinsäure eingesetzt werden. Bevorzugt wird Natrium- oder Kaliumoleat verwendet.

Weiterhin wirksam zur Verbesserung der Druckfarbenhaftung sind die wasserlöslichen Alkalisalze von Alkylsulfaten mit 8 bis 18 Kohlenstoffatomen. Dazu gehören Natrium- oder Kaliumtetradecylsulfat, Natrium- oder Kaliumlaurylsulfat, Natrium- oder Kaliumoctylsulfat und Natrium- oder Kaliummyristylsulfat.

Unter dem Begriff "wasserlöslich" ist zu verstehen, daß die Salze in gewöhnlichem Leitungswasser bei Raumtemperatur in Konzentrationen von mindestens 0,4 g auf 100 ml Wasser, vorzugsweise in Konzentrationen von mehr als 2,0 g auf 100 ml Wasser, löslich sein sollen.

Die als Haftvermittlerschichten verwendeten Salze müssen ferner bei Temperaturen über 200 °C, so wie sie beim Trocknen und Hitzefixieren von z. B. orientierter Polyesterfolie vorkommen, wärmestabil sein. Natriumoleat (Natriumsalz der Cis-9-octadecensäure) ist der erfindungsgemäß bevorzugte Vertreter wasserlöslicher Salze, da es in hohem Maße wärmestabil, gut wasserlöslich und im Handel erhältlich ist.

Wie oben angegeben wird die erfindungsgemäße Haftvermittlerschicht als wäßrige Lösung mit einem Feststoffgehalt im Bereich von etwa 0,2 bis 15 Gew.-%, vorzugsweise von etwa 0,3 bis 6 Gew.-%, auf die Basisfolie aufgebracht. Der bevorzugte Feststoffanteil ist so bemessen, daß sich ein Trockenschichtgewicht von etwa 0,05 bis 100 mg/m² Folienoberfläche ergibt. Vorzugsweise bewegt sich das Trockenschichtgewicht im Bereich von etwa 1 bis 35 mg/m², wobei das angestrebte Gewicht 4,6 mg/m² beträgt.

Die erfindungsgemäße Beschichtung kann auf eine oder beide Seiten der Folie aufgetragen werden. Sie kann auch auf eine Folienseite aufgebracht werden, während sich auf der Gegenseite eine andere Beschichtung befindet, z. B. eine hitzehärtbare Acryl- oder Methacrylbeschichtung, wie in US-A-4 214 035 beschrieben. In einigen Fällen kann die Beschichtung auch auf eine bereits auf der Folienoberfläche vorhandene unterschiedliche Haftvermittlerschicht aufgebracht werden, auf der sie haftet, z. B. eine hitzehärtbare Acrylbeschichtung gemäß US-A-3 819 773.

Die wäßrige Lösung enthält im wesentlichen die oben spezifizierten Salze und hat keine weiteren Bestandteile, die ihre haftvermittelnden Eigenschaften beeinträchtigen würden, wie z. B. Stoffteilchen oder polymere Bestandteile, in denen das Salz in geringen Mengen als Emulgator oder Dispergiermittel anwesend sein könnte. Der Begriff "enthält im wesentlichen" soll jedoch nicht die Anwesenheit geringer Mengen an anderen wasserlöslichen Bestandteilen ausschließen, z. B. von wasserlöslichen Farbstoffen, pH-Regulatoren und dergleichen. Die wäßrige Lösung besteht vorzugsweise aus Wasser (demineralisiertes Wasser oder Leitungswasser) und zwischen 0,2 und 10 Gew.-% eines oder mehrerer der obengenannten Salze.

Die zum Gegenstand der vorliegenden Erfindung zählende, haftvermittelnd vorbeschichtete Polyesterfolie ist in US-A-4 486 483 (= EP-A-0 134 463) beschrieben.

Zur Herstellung des erfindungsgemäßen flexiblen Aufzeichnungsmaterials wird auf die mit der Haftvermittlerschicht versehene Polyesterfolie ein ferromagnetisches Beschichtungsgemisch aufgebracht. Dieses ferromagnetische Beschichtungsgemisch enthält ferromagnetische Teilchen und ein Präpolymeres, die in einem starken Lösemittel, wie Tetrahydrofuran, Methylethylketon, Methylisobutylketon oder Cyclohexanon, gelöst vorliegen. Gemische aus Tetrahydrofuran und Cyclohexanon sind bevorzugte Lösemittel.

Als ferromagnetische Teilchen können alle für die Herstellung ferromagnetischer Beschichtungen üblichen Teilchen Verwendung finden. Dazu gehören beispielsweise stäbchenförmiges, gegebenenfalls durch Dotieren oder Adsorption mit Kobalt angereichertes γ-Fe₂O₃, Chromdioxid und Bariumferrit (BaOx6Fe₂O₃).

In einer bevorzugten Ausführungsform der vorliegenden Erfindung werden ferromagnetische Chromdioxidteilchen in dem polymeren Bindemittel dispergiert. Die Chromdioxidteilchen können zusätzlich gegen die Auswirkungen einer reduktiven Degradation, z. B. durch Wasser und bestimmte leicht oxidierbare funktionelle Gruppen wie Hydroxyl- oder Amingruppen, ausgerüstet sein. Solche stabilisierten Teilchen, wie sie beispielsweise in US-A-3 512 930 und US-A-3 529 930 beschrieben werden, werden bevorzugt verwendet.

Im allgemeinen streben die Hersteller von Magnetbändern möglichst hohe Beaufschlagungen mit Chromdioxid an, um die Magnetleistung zu maximieren. Ein zu hoher Chromdioxidgehalt hat jedoch nachteilige Auswirkungen auf die Abriebfestigkeit und kann zu einer sogenannten "Oxidabschuppung" führen, d. h. die ferromagnetischen Teilchen werden vom Magnetband abgerieben und bleiben an den Geräteoberflächen hängen. Derartige Oxidabschuppungen führen zu hohen Fehlerquoten und zu Geräteverschmutzungen.

Die erfindungsgemäße ferromagnetische Beschichtung enthält 70 bis 90 Gew.-%, bevorzugt 80 bis 90 Gew.-%, Chromdioxid. In Verbindung mit dem bevorzugt eingesetzten Polyurethan-Bindemittel beträgt der optimale Chromdioxidanteil 84 Gew.-%.

Als Bindemittel sind erfindungsgemäß alle herkömmlichen Systeme geeignet, die bei der Herstellung flexibler magnetischer Aufzeichnungsmaterialien für die Verankerung der ferromagnetischen Beschichtung auf der Polyesterträgerfolie üblich sind. Wie bereits erwähnt gehören zu den gebräuchlichen handelsüblichen Bindemitteln Polyurethane, Polyvinyle und Gemische oder Copolymere aus Polyurethanen und Polyvinylen.

Polyester-Polyurethane (thermoplastische Elastomere) werden häufig als Bindemittel für flexible magnetische Aufzeichnungsmaterialien eingesetzt. Sie bestehen aus Segmenten oder Blöcken chemisch unterschiedlicher Einheiten. Das relativ weiche Polyestersegment, das selbst ein kurzkettiges Polymeres darstellt, besteht aus einer Reihe wiederkehrender, esterartig miteinander verbundener Einheiten. Die Polyestersegmente entstehen durch Umsetzen einer bifunktionellen Carbonsäure mit einem bifunktionellen Alkohol, so daß die endständigen Gruppen des Esters überwiegend Alkoholgruppen sind. Das Molekulargewicht der Polyestersegmente liegt im allgemeinen zwischen 500 und 4 000, was etwa einer Kettenlänge von 4 bis 20 Estereinheiten entspricht.

Eine Verlängerung der Kettenlänge der relativ weichen Polyestersegmente bewirkt in der Regel eine Steigerung der Elastizität des Bindemittels. Im allgemeinen bestimmt der Polyesteranteil des Polyester-Polyurethans die Fließtemperatur und die Elastomereigenschaften des polymeren Bindemittels.

Das relativ harte Polyurethansegment stellt die zweite Komponente des Polyester-Polyurethanbindemittels dar. Seine chemischen und mechanischen Eigenschaften unterscheiden sich deutlich von denen des relativ weichen Polyestersegments: Das Polyurethansegment ist normalerweise ein hartes, starres Polymeres und besitzt einen Schmelzpunkt von etwa 200 °C. Das Polyurethan wird gewöhnlich durch Umsetzen eines difunktionellen aromatischen Diisocyanats wie 4,4'-Diphenylmethandiisocyanat (MDI) mit einem difunktionellen Alkohol wie 1,4-Butandiol hergestellt. Im Fall von Polyester-Polyurethanelastomeren, die in Beschichtungen auf Lösemittelbasis für Magnetaufzeichnungsmaterialien eingesetzt werden, finden normalerweise sehr kurzkettige Polyurethansegmente Verwendung, da die Polyurethankomponente in den für die Herstellung von Magnetbandbeschichtungslösungen gebräuchlichen Lösemitteln wie Tetrahydrofuran und Methylisobutylketon nur begrenzt löslich ist. Durch größere Polyurethansegmente werden außerdem die Härte, der E-Modul und die Fließtemperatur auf Kosten der Elastizität und Zähigkeit erhöht. Es muß also versucht werden, das Gleichgewicht der unterschiedlichen Eigenschaften so einzustellen, daß die Anforderungen für magnetische Aufzeichnungsverfahren bestmöglich erfüllt werden.

Ein bevorzugtes Polyester-Polyurethan-Bindemittel ist aus US-A-4 525 424 bekannt. In dieser Patentschrift wird ein Polyurethanbindemittel beschrieben, das ein Reaktionsprodukt ist aus
(A) einem Polyester mit endständigen Hydroxylgruppen, der seinerseits ein Reaktionsprodukt ist von einem hydrolysebeständigen zweiwertigen Alkohol, bevorzugt 1,4-Cyclohexandimethanol, mit einer Dicarbonsäure ausgewählt aus der Gruppe umfassend Adipinsäure, Azelainsäure, 1,12-Dodecandicarbonsäure oder Mischungen von diesen, wobei der Polyester eine OH-Zahl im Bereich von 50 bis 250 aufweist;
(B) einem Diol als Kettenverlängerer ausgewählt aus der Gruppe umfassend 1,4-Butandiol, 1,3-Butandiol, 1,5-Pentandiol, 1,6-Hexandiol und 2,5-Hexandiol, bevorzugt ein Gemisch aus 1,4-Butandiol und 1,6-Hexandiol, wobei die resultierende OH-Zahl von Polyester und Kettenverlängerer zusammen im Bereich von 130 bis 300 liegt; und
(C) einem aromatischen Diisocyanat, wie z. B. 4,4'-Diphenylmethandiisocyanat.

Dabei werden die Bestandteile (A), (B) und (C) im Verhältnis so aufeinander abgestimmt, daß das resultierende Polyurethan einen Polyurethananteil von 37 bis 40 Gew.-% aufweist.

Das eingesetzte Polyurethan hat vorzugsweise ein Molekulargewicht von mehr als 60 000, und das Molekulargewicht des im Polyurethan enthaltenen Polyestersegments beträgt vorzugsweise 500 bis 1 500. Wenn das Molekulargewicht des relativ weichen Polyestersegments deutlich unter 500 liegt, wird die chromdioxidhaltige Beschichtung zu hart, wodurch Schwierigkeiten bei der Verarbeitung auftreten können. Liegt das Molekulargewicht des Polyestersegments dagegen deutlich über 1 500, wird die Beschichtung unter Umständen zu weich, und es besteht dann die Neigung zu Oberflächenveränderungen bis hin zu vollkommen glatten Oberflächen. Dadurch werden die Reibungseigenschaften des Bandes beeinträchtigt. Durch den Kettenverlängerer (B) wird die Flexibilität des relativ harten Polyurethansegments erhöht. Darüber hinaus ermöglicht er das Beaufschlagen des Bindemittels mit Chromdioxidpartikeln in hoher Konzentration, ohne daß die Sprödigkeit in unzulässigem Maß zunimmt.

Die ferromagnetische Beschichtung wird in bekannter Weise auf die haftvermittelnd vorbeschichtete Polyesterfolie aufgetragen. Anschließend werden die Chromdioxidpartikel mit Hilfe eines Magnetfeldes ausgerichtet.

Danach wird die Folie getrocknet, um das starke Lösemittel zu entfernen und kalandriert, um die Oberfläche der Beschichtung zu glätten. Die magnetische Ausrichtung der Chromdioxidpartikel wird durch den Kalandriervorgang nicht beeinträchtigt. Im Anschluß daran wird das Präpolymere gehärtet, und die Folie wird auf die gewünschte Breite zugeschnitten, geglättet und gereinigt. Das so hergestellte flexible Magnetband kann nun auf eine Spule gewickelt oder für den Einsatz als Computerband in einer Kassette untergebracht werden.

Das polymere Bindemittel kann außerdem für ferromagnetische Beschichtungsgemische übliche Zusätze enthalten wie Dispergierhilfsmittel, Schmierstoffe, Antistatika und Fungizide. Eine beispielhafte Übersicht über Schmierstoffe, die für ferromagnetische Beschichtungen auf Chromdioxidbasis geeignet sind, ist in US-A-3 649 541 gegeben.

Zur Verbesserung seiner mechanischen Eigenschaften kann das ferromagnetische Aufzeichnungsmaterial zusätzlich mit einer rückseitigen Beschichtung versehen werden. Derartige Rückseitenbeschichtungen bestehen beispielsweise aus dem gleichen Bindemittelsystem wie die ferromagnetische Beschichtung, in dem aber anstelle der Chromdioxidteilchen nicht-ferromagnetische, leitfähige Partikel, z. B. Rußpartikel, dispergiert sind.

Die Haftfestigkeit eines Magnetbandes im Abziehtest hängt von verschiedenen Faktoren ab, wie z. B.:
a) ob die Trägerfolie vor dem Auftragen der ferromagnetischen Beschichtung mit einer Haftvermittlerschicht versehen wurde;
b) von dem jeweils verwendeten Bindemittel;
c) von dem Grad der Aushärtung;
d) der Dicke der ferromagnetischen Beschichtung;
e) dem Verhältnis von Chromdioxidpartikeln zum Bindemittel und
f) den Nebenwirkungen des Lösemittels.

Innerhalb eines bestimmten Lösemittelsystems wirkt sich der Grad der Aushärtung am entscheidendsten auf die Haftung aus. Wenn die ferromagnetische Schicht zu stark vernetzt ist, wird das Bindemittel spröde, und die Hafteigenschaften sind mäßig. Wenn dagegen der Grad der Härtung zu gering ist, bestitzt das Bindemittel nur ungenügende Kohäsionskraft, woraus sich ein zu hoher Reibungskoeffizient ergeben kann.

Durch Verwendung der erfindungsgemäßen Haftvermittlerbeschichtung kann unter sonst konstant gehaltenen Bedingungen die Haftfestigkeit eines Magnetbandes im Abziehtest wesentlich gesteigert werden.

Anhand der folgenden Ausführungsbeispiele wird die Erfindung näher erläutert.

### Beispiel 1

### Herstellung eines flexiblen Aufzeichnungsmaterials aus einer Trägerfolie mit Haftvermittlerbeschichtung:

Eine Schmelze aus Polyethylenterephthalatpolymeren mit einem Gehalt an Siliciumdioxid und Calciumcarbonat gemäß US-A-3 821 156 wurde durch eine Breitschlitzdüse auf eine Gießtrommel extrudiert, die auf einer Temperatur von ca. 250 °C gehalten wurde. Die Schmelze erstarrte zu einer gegossenen Folie. Die gegossene Folie wurde im Streckverhältnis von etwa 3,5 : 1 längsgestreckt, wobei ihre Temperatur auf etwa 80 °C gehalten wurde.

Die längsgestreckte Folie wurde mit einem Coronaentladegerät coronabehandelt und anschließend durch Umkehrgravurbeschichtung mit einer wäßrigen Lösung beschichtet, die 0,75 Gew.-% Natriumoleat gelöst enthielt. Das Naßgewicht der Beschichtung betrug ca. 2,5 mg/m².

Die längsgestreckte, coronabehandelte und beschichtete Folie wurde bei einer Temperatur von etwa 100 °C getrocknet. Sie wurde dann im Streckverhältnis von 3,9 : 1 in Querrichtung zu einer biaxial orientierten Folie gestreckt. Die biaxial gestreckte Folie wurde bei einer Höchsttemperatur von 203 °C hitzefixiert und auf eine Rolle gewickelt. Das Trockengewicht der Beschichtung betrug etwa 4,7 mg/m² Folienoberfläche. Die Basisfolie aus Polyethylenterephthalat hatte eine Dicke von etwa 23 µm.

Auf die so hergestellte, mit Füllstoffpartikeln und Haftvermittlerschicht versehene Folie wurde eine ferromagnetische Beschichtung aus Chromdioxidteilchen, die in einem polymeren Bindemittel aus dem vorstehend beschriebenen bevorzugten Polyester-Polyurethan dispergiert waren, aufgebracht. 30 Abschnitte der mit der ferromagnetischen Beschichtung versehenen Folie mit einer Länge von jeweils 165 m wurden auf Kassetten aufgespult, die für den Einsatz in IBM-Geräten des Typs 3480 bestimmt waren. Diese Bandkassetten wurden zur Bewertung untersucht.

### Beispiel 2

### Prüfung der Haftfestigkeit der flexiblen Magnetaufzeichnungsmaterialien mit Hilfe des Abziehtests:

Zwei der Bandkassetten des Typs 3480 wurden geöffnet und das darin enthaltene flexible Aufzeichnungsmaterial, d. h. Magnetband, wurde entnommen. Von jedem Band wurde eine 38,10 cm lange Probe abgeschnitten.

Zur Prüfung der Abziehfestigkeit des Magnetbandes wurde die ferromagnetische Beschichtung der Proben linienförmig angeritzt. Danach wurde ein Ende der 38,10 cm langen Probestücke auf einer glatten Metallplatte befestigt. Dies erfolgte mit Hilfe eines doppelseitigen Klebebands (entsprechend dem Typ "Permacel P-941"), das zwischen Metallplatte und Magnetband angebracht wurde. Das freie Ende des zu prüfenden Bandes und des Metall/Band-Verbundes wurde jeweils in eine der Klemmbacken einer Instron TM-4-Zugprüfmaschine eingespannt. Der Abstand zwischen den Klemmbacken betrug zu Beginn der Prüfung 25,40 cm, so daß das Band beim Auseinanderfahren der Klemmbacken in einem Winkel von 180° von der Platte abgezogen wurde, beginnend an der eingeritzten Linie. Die Klemmbacken wurden mit einer Nenngeschwindigkeit von 25,4 cm/min voneinander wegbewegt. Die durchschnittliche Kraft, die aufgewendet werden mußte, um das Magnetband von dem druckempfindlichen Klebeband abzuziehen, ist in der nachstehenden Tabelle angegeben.

**Tabelle**

| Abziehfestigkeitswerte für Polyesterbänder mit einer Haftvermittlerschicht | |
|---|---|
| Probe Nr. | Schälfestigkeit (N/mm) |
| 1 | 0,147 |
| 2 | 0,171 |

Die in der Tabelle angegebenen Werte liegen deutlich über den Werten des ANSI-Normvorschlags von 0,12 N/mm. Wie die Magnetbandherstellfirma, bei der die mit der Haftvermittlerschicht versehene Polyesterfolie beschichtet wurde, mitteilte, betrug die Schälfestigkeit eines Magnetbandes, für dessen Herstellung eine Polyesterfolie ohne Haftvermittlerschicht eingesetzt wurde, lediglich 0,052 N/mm und lag damit weit unter dem ANSI-Normvorschlag.

## Patentansprüche

1. Magnetisches Aufzeichnungsmaterial umfassend
i) eine orientierte Polyesterfolie,
ii) eine Haftvermittlerschicht auf wenigstens einer Seite der orientierten Polyesterfolie,
iii) eine ferromagnetische Beschichtung über der Haftvermittlerschicht, enthaltend ferromagnetische Partikel und polymeres Bindemittel, dadurch gekennzeichnet, daß die Haftvermittlerschicht als Hauptbestandteil ein Salz enthält, ausgewählt aus der Gruppe
a) wasserlösliches Salz aus einer ungesättigten Fettsäure mit 10 bis 18 C-Atomen und einem Alkalimetall oder Mischungen solcher Salze,
b) wasserlösliches Salz aus einem Alkylsulfat mit 8 bis 18 C-Atomen und einem Alkalimetal oder Mischungen solcher Salze,
und daß der Hauptbestandteil in einer Menge vorliegt, die ausreichend ist, um die Haftung der ferromagnetischen Beschichtung an der orientierten Polyesterfolie zu verbessern.

2. Magnetisches Aufzeichnungsmaterial nach Anspruch 1, dadurch gekennzeichnet, daß die ferromagnetischen Partikel ausgewählt sind aus der Gruppe umfassend Eisenoxid, Chromdioxid aund Bariumferrit, bevorzugt umfassend Eisenoxid und Chromdioxid, wobei die ferromagnetischen Partikel aus Eisenoxid besonders bevorzugt zusätzlich einen oberflächlichen Überzug aus Kobalt besitzen.

3. Magnetisches Aufzeichnungsmaterial nach Anspruch 1 oder 2, dadurch gekennzeichnet, daß die orientierte Polyesterfolie eine biaxial orientierte Polyethylenterephthalatfolie ist.

4. Magnetisches Aufzeichnungsmaterial nach einem der Ansprüche 1 bis 3, dadurch gekennzeichnet, daß die ungesättigte Fettsäure mit 10 bis 18 C-Atomen ausgewählt ist aus der Gruppe Ölsäure, Palmitoleinsäure, Rizinoleinsäure, Petroselinsäure und Dodecyclensäure, wobei das wasserlösliche Salz besonders bevorzugt Natriumoleat ist.

5. Magnetisches Aufzeichnungsmaterial nach einem der Ansprüche 1 bis 4, dadurch gekennzeichnet, daß das wasserlösliche Salz aus einem Alkylsulfat und 8 bis 18 C-Atomen ein Alkalisalz von Laurylsulfat, insbesondere Natriumlaurylsulfat, enthält.

6. Magnetisches Aufzeichnungsmaterial nach einem der Ansprüche 1 bis 5, dadurch gekennzeichnet, daß das polymere Bindemittel ein Polyurethan/Polyester-Blockcopolymer enthält, welches ein Reaktionsprodukt ist von
(A) einem Polyester mit endständigen Hydroxylgruppen, der seinerseits ein Reaktionsprodukt ist von einem hydrolysebeständigen zweiwertigen Alkohol mit Adipinsäure, Azelainsäure, 1,12-Dodecandicarbonsäure oder Mischungen von diesen, wobei der Polyester eine OH-Zahl im Bereich von 50 bis 250 aufweist;
(B) einem Kettenverlängerer enthaltend einen primären oder sekundären Alkohol ausgewählt aus der Gruppe 1,4-Butandiol, 1,3-Butandiol, 1,5-Pentandiol, 1,6-Hexandiol und 2,5-Hexandiol, wobei die resultierende OH-Zahl von Polyester und Kettenverlängerer zusammen im Bereich von 130 bis 300 liegt;
(C) einem aromatischen Diisocyanat;
wobei die Polyurethaneinheiten in dem Polyurethan/Polyester-Blockcopolymeren eine Molmasse von > 60.000 aufweisen und in einer Menge von 37 bis 40 Gew.-%, bezogen auf das Gesamtgewicht des Blockcopolymeren, vorhanden sind und wobei die Polyestersegmente Molmassen im Bereich von 500 bis 1500 aufweisen, und daß die ferromagnetischen Partikel Chromdioxidpartikel enthalten und innerhalb der ferromagnetischen Beschichtung in einer Menge von 80 bis 88 Gew.-%, bezogen auf das Gesamtgewicht der ferromagnetischen Beschichtung, vorhanden sind.

7. Magnetisches Aufzeichnungsmaterial nach Anspruch 6, dadurch gekennzeichnet, daß der zweiwertige Alkohol 1,4-Cyclohexandimethanol ist.

8. Magnetisches Aufzeichnungsmaterial nach Anspruch 6, dadurch gekennzeichnet, daß der Polyester (A) als zweiwertigen Alkohol 1,4-Cyclohexan-di(methylenhydroxid) enthält, daß der Kettenverlängerer (B) 1,4-Butandiol ist und daß das aromatische Diisocyanat (C) 4,4-Methylen-bis-(1,4-phenylen)-diisocyanat ist.

9. Magnetisches Aufzeichnungsmaterial nach einem der Ansprüche 1 bis 8, dadurch gekennzeichent, daß es eine zusätzliche Rückseitenbeschichtung besitzt enthaltend ein Bindemittel und darin fein verteilte nicht ferromagnetische Partikel.

10. Verfahren zum Herstellen eines magnetischen Aufzeichnungsmaterials nach einem der Ansprüche 1 bis 9, umfassend die Schritte
i) Extrudieren eines im wesentlichen amorphen Polyesters in Form einer Flachfolie und Abkühlen der Schmelze zur Bindung einer Vorfolie;
ii) Orientieren der Vorfolie in Längsrichtung zur Bildung einer monoaxial orientierten Polyesterfolie;
iii) Beschichten der monoaxial orientierten Polyesterfolie mit einer wäßrigen Lösung enthaltend
a) wasserlösliches Salz aus einer ungesättigten Fettsäure mit 10 bis 18 C-Atomen und einem Alkalimetall oder Mischungen solcher Salze, oder
b) wasserlösliches Salz aus einem Alkylsulfat mit 8 bis 18 C-Atomen und einem Alkalimetall oder Mischungen solcher Salze
zur Bildung einer monoaxial orientierten Polyesterfolie mit Haftvermittlerbeschichtung;
iv) Orientieren der monoaxial orientierten Polyesterfolie mit Haftvermittlerbeschichtung in Querrichtung zur Bildung einer biaxial orientierten Polyesterfolie;
v) Hitzefixieren der biaxial orientierten Polyesterfolie;
vi) Überziehen der Haftvermittlerbeschichtung auf der biaxial orientierten und hitzefixierten Polyesterfolie mit einer ferromagnetischen Beschichtung enthaltend
a) ein Lösemittel aus der Gruppe Tetrahydrofuran, Methylethylketon, Methylisobutylketon und Cyclohexanon,
b) ferromagnetische Partikel,
c) ein Präpolymer;
vii) Aushärten des Präpolymers zur Bildung einer ferromagnetischen Beschichtung enthaltend ferromagnetische Partikel verteilt in einem polymeren Bindemittel.

11. Verfahren nach Anspruch 10, dadurch gekennzeichnet, daß die monoaxial orientierte Polyesterfolie vor dem Beschichten mit der wärßigen Lösung einer Behandlung durch elektrische Coronaentladung unterzogen wird.

12. Verfahren nach Anspruch 10 oder 11, dadurch gekennzeichnet, daß die wäßrige Lösung zur Bildung der Haftvermittlerschicht aufgetragen wird in einer Menge, die einem Trockengewicht der Haftvermittlerschicht im Bereich von 0,05 bis 100 mg/m² entspricht, bevorzugt von 1 bis 35 mg/m².

## Claims

1. A magnetic recording material comprising
i) an oriented polyester film;
ii) an adhesion-promoting coating on at least one side of said oriented polyester film;
iii) a ferromagnetic coating applied over said adhesion-promoting coating, said ferromagnetic coating comprising ferromagnetic particles and a polymeric binder;
characterized in that the adhesion-promoting coating contains, as its main constituent, a salt selected from the group comprising
a) a water-soluble salt prepared from an unsaturated fatty acid having 10 to 18 carbon atoms and an alkali metal or mixtures of such salts;
b) a water-soluble salt prepared from an alkyl sulfate having 8 to 18 carbon atoms and an alkali metal or mixtures of such salts;
and in that said main constituent is present in an amount sufficient to improve the adhesion of the ferromagnetic coating to the oriented polyester film.

2. The magnetic recording material of claim 1 wherein the ferromagnetic particles are selected from the group consisting of ferric oxide, chromium dioxide, and barium ferrite, and preferably comprise ferric oxide and chromium dioxide, and wherein said ferromagnetic particles comprising ferric oxide in particular additionally have a superficial coating comprising cobalt.

3. The magnetic recording material of claim 1 or 2 wherein said oriented polyester film is biaxially oriented polyethylene terephthalate film.

4. The magnetic recording material of any of claims 1 to 3 wherein said unsaturated fatty acid having 10 to 18 carbon atoms is selected from the group consisting of oleic, palmitoleic, ricinoleic, petroselinic and dodecylenic acids, and the water-soluble salt particularly preferably is sodium oleate.

5. The magnetic recording material of any of claims 1 to 4 wherein an alkali metal salt of lauryl sulfate, in particular sodium lauryl sulfate, is contained in the water-soluble salt prepared from an alkyl sulfate having 8 to 18 carbon atoms.

6. The magnetic recording material of any of claims 1 to 5, wherein said polymeric binder comprises a polyurethane/polyester block copolymer which is the reaction product of
(A) a hydroxyl-terminated polyester, which itself is a reaction product of a difunctional alcohol having hydrolytic stability, and adipic acid, azelaic acid, 1,12-dodecanedicarboxylic acid or mixtures thereof, said polyester having a hydroxyl number of about 50 to 250;
(B) a chain extender comprising a primary or a secondary alcohol selected from the group comprising 1,4-butanediol; 1,3-butanediol; 1,5-pentanediol; 1,6-hexanediol; and 2,5-hexanediol, the resultant hydroxyl number of said polyester and chain extender being about 130 to 300; and
(C) an aromatic diisocyanate;
said polyurethane/polyester block copolymer having a content of polyurethane units of a molecular weight of more than 60,000 in the range of 37 to 40 % by weight, relative to the total weight of the block copolymer, and said polyester segments having molecular weights in the range of 500 to 1,500; and wherein said ferromagnetic particles comprise chromium dioxide particles, and are present in said ferromagnetic coating in the range of from 80 to 88 % by weight, relative to the total weight of said ferromagnetic coating.

7. The magnetic recording material of claim 6, wherein said difunctional alcohol is 1,4-cyclohexanedimethanol.

8. The magnetic recording material of claim 6, wherein said polyester (A) contains 1,4-cyclohexane-di(methylenehydroxide) as the difunctional alcohol, wherein said chain extender (B) is 1,4-butanediol and wherein said aromatic diisocyanate (C) is 4,4-methylene-bis-(1,4-phenylene)diisocyanate.

9. The magnetic recording material of any of claims 1 to 8, wherein said material is provided with an additional backside coating comprising non-ferromagnetic particles dispersed in a binder.

10. A process for producing the magnetic recording material of any of claims 1 to 9, comprising the steps of
i) extruding a substantially amorphous polyester in sheet-like form and subsequently cooling the melt to form cast polyester sheet;
ii) orienting said cast sheet in the longitudinal direction, thereby forming monoaxially oriented polyester film;
iii) coating said monoaxially oriented polyester film with an aqueous solution comprising
a) a water-soluble salt of an unsaturated fatty acid having from 10 to 18 carbon atoms and an alkali metal or mixtures of such salts;
or
b) a water-soluble salt of an alkyl sulfate having from 8 to 18 carbon atoms and an alkali metal or mixtures of such salts;
so as to obtain a monoaxially oriented polyester film provided with an adhesion-promoting coating;
iv) orienting said monoaxially oriented polyester film carrying said adhesion-promoting coating in the transverse direction, thereby forming biaxially oriented polyester film;
v) heatsetting said biaxially oriented polyester film;
vi) overcoating said adhesion-promoting coating present on said biaxially oriented and heatset polyester film with a ferromagnetic coating composition comprising
a) a solvent selected from the group comprising tetrahydrofuran, methylethylketone, methylisobutylketone, and cyclohexanone,
b) ferromagnetic particles,
c) a pre-polymer, and
vii) curing said pre-polymer to produce a ferromagnetic coating comprising ferromagnetic particles dispersed in a polymeric binder.

11. The process of claim 10, wherein said monoaxially oriented polyester film is subjected to a corona discharge treatment prior to the application of said aqueous solution.

12. The process of claim 10 or 11, wherein said aqueous solution for forming said adhesion-promoting coating is applied in an amount corresponding to a dry weight of said adhesion-promoting coating in the range of 0.05 to 100 mg/m², preferably of 1 to 35 mg/m².

## Revendications

1. Matériau d'enregistrement magnétique comprenant:
i) un film de polyester orienté,
ii) une couche de promoteur d'adhérence sur au moins une face du film de polyester orienté,
iii) une couche ferromagnétique disposée sur la couche de promoteur d'adhérence, contenant des particules ferromagnétiques et un liant polymère,
caractérisé en ce que la couche de promoteur d'adhérence renferme, comme constituant principal, un sel choisi parmi les suivants:
a) sel hydrosoluble à base d'un acide gras insaturé en C₁₀₋₁₈ et d'un métal alcalin, ou un mélange de tels sels,
b) sel hydrosoluble à base d'un sulfate d'alkyle en C₈₋₁₈ et d'un métal alcalin, ou un mélange de tels sels,
et que le constituant principal est présent en une quantité qui est suffisante pour améliorer l'adhérence de la couche ferromagnétique au film de polyester orienté.

2. Matériau d'enregistrement magnétique selon la revendication 1, caractérisé en ce que les particules ferromagnétiques sont choisies dans le groupe comprenant l'oxyde de fer, le dioxyde de chrome et le ferrite de baryum, de préférence l'oxyde de fer et le dioxyde de chrome, une préférence toute particulière allant aux particules ferromagnétiques d'oxyde de fer recouvertes en plus d'une couche superficielle à base de cobalt.

3. Matériau d'enregistrement magnétique selon la revendication 1 ou 2, caractérisé en ce que le film de polyester orienté est un film de poly(téréphtalate d'éthylène) biaxialement orienté.

4. Matériau d'enregistrement magnétique selon une quelconque des revendications 1 à 3, caractérisé en ce que l'acide gras insaturé en C₁₀₋₁₈ est choisi parmi les acides suivants: oléique, palmitoléique, ricinoléique, pétrosélinique et dodécylénique, le sel hydrosoluble particulièrement préféré étant l'oléate de sodium.

5. Matériau d'enregistrement magnétique selon une quelconque des revendications 1 à 4, caractérisé en ce que le sel hydrosoluble à base d'un sulfate d'alkyle en C₈₋₁₈ comprend un sel alcalin de sulfate de lauryle, en particulier le laurylsulfate de sodium.

6. Matériau d'enregistrement magnétique selon une quelconque des revendications 1 à 5, caractérisé en ce que le liant polymère est un copolymère séquencé polyester-polyuréthane, qui est un produit de la réaction de:
(A) un polyester à groupes hydroxyle terminaux, lui-même produit de la réaction d'un diol stable à l'hydrolyse avec l'acide adipique, l'acide azélaïque, l'acide 1,12-dodécanedicarboxylique ou des mélanges de ces acides, le polyester présentant un indice d'hydroxyle de 50 à 250,
(B) un allongeur de chaîne comprenant un alcool primaire ou secondaire choisi dans le groupe formé par: 1,4-butanediol, 1,3-butanediol, 1,5-pentanediol, 1,6-hexanediol et 2,5-hexanediol, l'indice d'hydroxyle global résultant du polyester et de l'allongeur de chaîne étant compris entre 130 et 300,
(C) un diisocyanate aromatique,
les motifs polyuréthane dans le copolymère séquencé polyester-polyuréthane ayant une masse moléculaire supérieure à 60.000 et lesdits motifs étant présents à raison de 37 à 40 % en poids, par rapport au poids total du copolymère séquencé, et les segments polyester ayant des masses moléculaires de 500 à 1500, et en ce que les particules ferromagnétiques comportent des particules de dioxyde de chrome et sont présentes à l'intérieur de la couche ferromagnétique à raison de 80 à 88 % en poids par rapport au poids total de la couche ferromagnétique.

7. Matériau d'enregistrement magnétique selon la revendication 6, caractérisé en ce que le diol est le 1,4-cyclohexanediméthanol.

8. Matériau d'enregistrement magnétique selon la revendication 6, caractérisé en ce que le polyester (A) contient, comme diol, le 1,4-cyclohexanediméthanol, l'allongeur de chaîne (B) est le 1,4-butanediol et le diisocyanate aromatique (C) est le 4,4'-méthylène-bis(1,4-phénylène)-diisocyanate.

9. Matériau d'enregistrement magnétique selon une quelconque des revendications 1 à 8, caractérisé en ce qu'il contient une couche arrière supplémentaire contenant un liant comportant des particules non ferromagnétiques finement divisées.

10. Procédé de fabrication d'un matériau d'enregistrement magnétique selon une quelconque des revendications 1 à 9, qui comprend les étapes consistant à:
i) extruder un polyester pratiquement amorphe sous forme d'un film plat et refroidir la masse fondue afin de former un préfilm,
ii) orienter le préfilm longitudinalement pour former un film de polyester à orientation monoaxiale,
iii) enduire le film de polyester à orientation monoaxiale avec une solution aqueuse contenant:
a) un sel hydrosoluble à base d'un acide gras insaturé en C₁₀₋₁₈ et d'un métal alcalin, ou un mélange de tels sels, ou
b) un sel hydrosoluble à base d'un sulfate d'alkyle en C₈₋₁₈ et d'un métal alcalin, ou un mélange de tels sels, pour former un film de polyester à orientation monoaxiale et comportant une couche de promoteur d'adhérence,
iv) orienter dans le sens transversal le film de polyester à orientation monoaxiale et comportant une couche de promoteur d'adhérence, afin de former un film de polyester biaxialement orienté,
v) thermofixer le film de polyester biaxialement orienté,
vi) recouvrir la couche de promoteur d'adhérence, sur le film de polyester biaxialement orienté et thermofixé, avec une couche d'enduction ferromagnétique contenant:
a) un solvant fort, choisi dans le groupe formé par le tétrahydrofurane, la méthyléthylcétone, la méthylisobutylcétone et la cyclohexanone,
b) des particules ferromagnétiques,
c) un prépolymère,
vii) durcir le prépolymère pour former une couche ferromagnétique contenant des particules ferromagnétiques réparties dans un liant polymère.

11. Procédé selon la revendication 10, caractérisé en ce que le film de polyester monoaxialement orienté est soumis à un traitement par décharge électrique corona, avant son enduction avec la solution aqueuse.

12. Procédé selon la revendication 10 ou 11, caractérisé en ce que, pour former la couche de promoteur d'adhérence, on dépose la solution aqueuse en une quantité correspondant à un poids sec de ladite couche de 0,05 à 100 mg/m², de préférence 1 à 35 mg/m².
